# EUROPEAN PATENT SPECIFICATION

(11) **EP 1 468 852 B1**
(45) Date of publication and mention of the grant of the patent: **28.12.2005**
(21) Application number: 04380087.9
(22) Date of filing: 16.04.2004
(51) Int. Cl.: B60H 1/32, F24F 5/00

(54) **Forced drainage system for an airconditioner with evaporation cooling**
Saugstrahlunterstütztes Ablaufsystem für eine Klimaanlage mit offener Verdampfung
Système d'écoulement forcé par aspiration pour climatisation à évaporation d'eau

(30) Priority: 16.04.2003 ES 200300916
(43) Date of publication of application: 20.10.2004
(73) Proprietor: Dirna, S.A., 28806 Alcala de Henares (Madrid) (ES)
(72) Inventor: Perez Mediavilla, Rafael, 28806 Alcala de Henares (Madrid) (ES)
(74) Representative: Maldonado Jordan, Julia

(56) References cited:
- US-A- 4 998 412
- US-A- 5 374 380
- US-B2- 6 511 049

## Description

### FIELD OF THE INVENTION

The object of the present invention is a forced drainage system for the intermediate deposit of an evaporative air conditioner.

### BACKGROUND OF THE INVENTION

The so-called evaporative air conditioners are air conditioning systems having a specific application in vehicles such as automobiles and, particularly, trucks, formed by a first unit situated on the roof of a cab, the interior air of which is to be conditioned, connected, by a pipe grid for the passage of water and electrical wires for the transmission of electricity, with a second unit usually located separately and at a lower height than the first unit. The second unit comprises a water deposit and a pump which allows conducting the water to the first unit, which in turn comprises a porous filter moistened by the water and an air propeller which allows introducing outside air which has passed through the porous filter in the cab. Thus, due to the effect of the evaporation and saturation of the circulating air, it is particularly possible to achieve a decrease of the temperature of the air introduced in the cab and the control of the ambient temperature thereof.

However, the constructive form disclosed has the drawback that often, not all the water penetrating the first unit is evaporated in the air cooling process. To prevent spills or leaks of the unevaporated water, particularly into the cab interior, evaporative air conditioners incorporate a deposit in the first unit, conventionally called "intermediate deposit" which, situated below the porous filter, collects the excess unevaporated water of the first unit due to gravity.

Even so, in practice there are cases in which the base (usually the roof of the cab of a truck) on which the mentioned first unit is installed has a forward inclination due to fundamentally aerodynamic reasons, which, combined with the fact that the outlets of the drainpipes must be carried out towards the rear portion both for constructive and aesthetic reasons (so that they are not visible to whom is usually in the vehicle), makes it so that the draining cannot be carried out only due to gravity, spills towards the exterior and even in the cab interior possibly occurring.

Therefore, there is a necessity for a forced drainage system for an intermediate deposit of an evaporative air conditioner preventing the leaks and spills of excess water of the first unit, situated above the cab, the air of which is to be conditioned, to the exterior and interior of said cab, in situations in which it is not possible to collect all the excess water in said first unit in the intermediate deposit due to gravity.

US 6 511 049 shows a forced drainage system according to the preamble of claim 1.

### SUMMARY OF THE INVENTION

The object of the present invention is to provide a forced drainage system for continous drainage of an intermediate deposit of an evaporative air conditioner which prevents spills and leaks of water of the unit integrating the evaporative air conditioner which is situated on the cab of a vehicle to be cooled, particularly when it is not possible to collect said water due to gravity in an intermediate deposit situated in said unit.

Said object is achieved by means of a forced drainage system for the intermediate deposit of an evaporative air conditioner, comprising a first unit situated on the roof of a cab, the interior air of which is to be conditioned, which comprises at least a support base, a porous filter, the mentioned intermediate deposit, an air propeller and a cover, and preferably, also one or more air ducts of the air propeller to the cab, an electronic control box for the evaporative air conditioner (which can be started up and controlled by means of a radio frequency remote control and be incorporated in a door warning system), joined to the first unit and situated inside the cab, and a cover plate for the cavity of the hatch in which the first unit is fixed; and a second unit separated from the first unit and situated at a lower height than the latter, which comprises an outer water deposit and a pump propelling the water towards the first unit and, preferably, also a water level sensor in said outer water deposit; the first unit and the second unit being connected by at least one delivery pipe and by at least one gravity drainage drainpipe, as well as by one or more wires allowing the circulation of electric current for the actuation and functioning of the system; wherein a hollow T-shaped part is provided connecting the intermediate deposit with the delivery pipe and a return pipe, such that provided there is always a water level in the intermediate deposit, the water flows towards the return pipe.

### BRIEF DESCRIPTION OF THE DRAWINGS

The previous summary of the invention, as well as the following detailed description thereof, will be better understood when read in conjunction with the attached drawings which, with an illustrative and non-limiting character, show the following:
Figure 1 shows a schematic view of an evaporative air conditioner of the state of the art.
Figure 2 shows a schematic view of an embodiment of the forced drainage system for the intermediate deposit of an evaporative air conditioner of the invention.

### DETAILED DESCRIPTION OF AN EMBODIMENT OF THE INVENTION

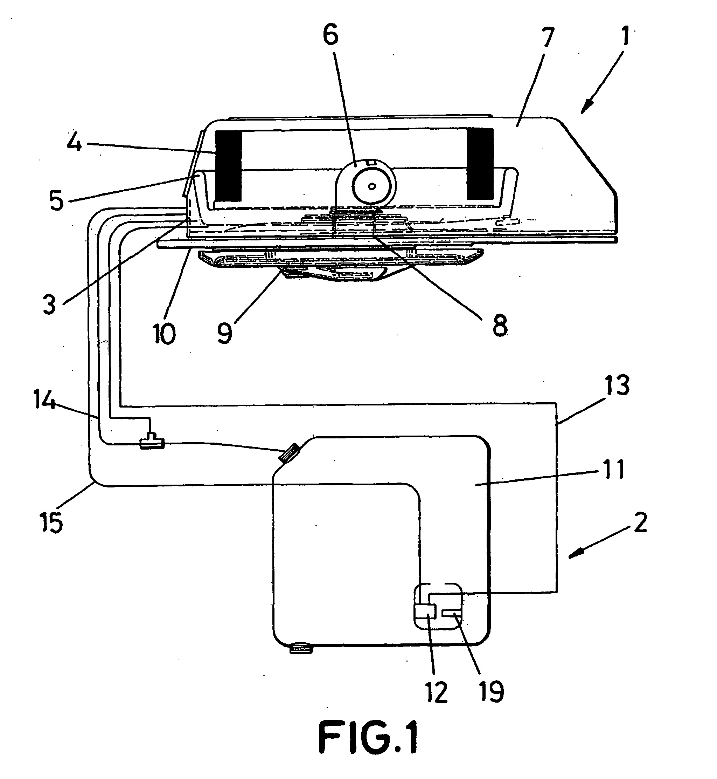

In Figure 1, a diagram of an evaporative air conditioner of the state of the art can be seen. As can be observed, it essentially consists of a first unit 1 and a second unit 2.

The first unit 1 is situated on the roof of a cab, the interior ambient of which is to be conditioned (usually the cab of a truck), and has a support base 3 which can be fixed to the roof of the cab. Particularly in the case that the cavity of the hatch of the cab of a truck is used, said fixing could be facilitated by means of a cover plate 10 for said cavity. An essential part of the first unit 1 is a porous filter 4, as will be seen, it becomes impregnated with water coming from the second unit 2. The air coming from outside, which is usually taken through holes or gratings (not specifically shown) in the lower portion of the support base 3, passes through the porous filter 4 before being propelled to the cab interior by means of an air propeller 6. The filtered air, and therefore already impurity-free and moistened, is directed towards the cab, preferably, by means of air ducts 8, consisting of suitable conduits. Thus, air can be made to reach the cab interior at a lower temperature than that of the ambient temperature therein, thus cooling the cab.

The first unit 1 is covered with a cover 7 in order to protect the constituent elements thereof from the exterior.

It is appropriate to install an electronic control box 9 for the evaporative air conditioner in the cab interior, and this is usually carried out by placing it in the interior portion of the cab roof, suitably connecting said box 9 to the first unit 1.

The water supplied to the first unit 1 comes from the second unit 2, usually situated at a lower height than the first unit 1 and outside of it, which is provided with an outer water deposit 11 and with a pump 12 propelling the water from said deposit towards the first unit 1. Preferably, the second unit 2 is provided with a water level sensor 19 in said deposit 11.

The first unit 1 and the second unit 2 are connected by a delivery pipe 13 conducting the water propelled by the pump 12 from the outer water deposit 11 to the first unit 1, impregnating the porous filter 4 and evaporating upon contact with the air. The unevaporated water falls from the porous filter 4 to the intermediate deposit 5, from where it is drained due to gravity by means of the drainpipe 14, which in turn opens into the outer water deposit 11.

The system in turn is provided with the corresponding wires 15 allowing the circulation of electric current necessary for its functioning, particularly of the pump 12 propelling the water and of the air propeller 6. The electrical conduits of an evaporative air conditioner are known by the persons skilled in the art, so they are not critical for the present invention and therefore will not be stressed in this description.

One drawback of the type of construction disclosed rests on the fact that when the roof of the cab is forwardly inclined (which is usually frequent in trucks due to aerodynamic and aesthetic reasons) and the drainpipe 14 is placed at the rear portion of the intermediate deposit 5, the return of the unevaporated water to the outer water deposit 11 cannot occur, which eventually causes water leaks and spills outside the cab, and occasionally even in the interior.

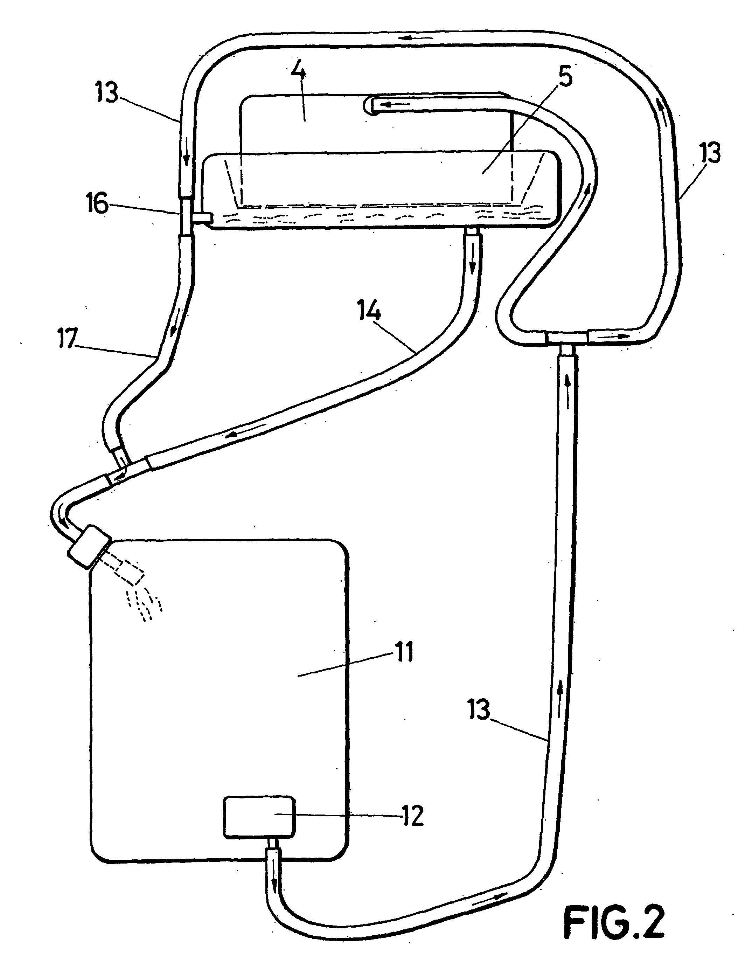

However, and as can be specifically seen in Figure 2, it is possible to overcome this problem with the construction of the invention.

In it, the intermediate deposit 5 is provided, as is usual, with a rear outlet to a drainpipe 14 allowing the return of the unevaporated water to the outer water deposit 11. Furthermore, a delivery pipe 13 conducts water, as is also usual, from the second unit 2 to the porous filter 4, but in turn it is directed outside of the porous filter 4 and intermediate tank 5 to one of the ends of a hollow T-shaped part 16 to which it is connected. The end of the hollow part 16 opposite to the end of its connection to the delivery pipe 13 is joined to the return pipe 17, and the end perpendicular to the shaft joining the two mentioned ends opens into the intermediate deposit 5. The T-shaped hollow part 16 has a larger diameter in the shaft opening into the intermediate deposit 5 in relation to the shaft connected to the delivery pipe 13 and to the return pipe 17, whereby the production of the Venturi effect is achieved, causing a negative pressure on the shaft of the hollow T-shaped part 16 opening into the intermediate deposit 5, making it so that provided there is always water in the latter, the water flows towards the return pipe 17, even when the pump 12 propelling the water is in an inoperative state.

Persons skilled in the art will understand that modifications in the described embodiment can be introduced without separating it from the essentiality of the invention. For example, several T-shaped parts connected to the intermediate deposit could be installed, as well as several return pipes. Or there could also be more than one gravity drainage drainpipe. Other water level sensors could also be placed in the outer water deposit 11 in addition to the aforementioned water level sensor 19 (which would be particularly indicated in the event that the pump 12 propelling the water was an electric pump rather than a depression pump). Likewise, if the usual application of the evaporative air conditioner which the forced drainage system for the intermediate deposit of the invention is part of is in the cab of a truck, the use of the evaporative air conditioner is not excluded in the conditioning of the ambient of other enclosed areas (for example, other vehicles, ground vehicles or otherwise, or machinery control cabs, such as in cranes). Furthermore, the invention is susceptible to being combined with other improvements. Thus, for example, the evaporative air conditioner could be actuated by the electronic control box 9 when it is started up and/or controlled or regulated by means of a radio frequency remote control (having the advantage that, unlike traditional infrared radiation remote controls, it does not specifically need to be oriented towards the electronic control box 9, which facilitates driving when the evaporative air conditioner is installed in a vehicle). It is also possible that the invention be used in an evaporative air conditioner in which the electronic control box 9 is integrated with a door warning system of the enclosed area, the ambient of which is to be conditioned, which would increase security due to there being an additional alarm element which would also be connected if someone tried to remove the first unit 1 from outside in order to access the interior of the enclosed area through the cavity where it is housed. Therefore, the invention must be in accordance with the claims more than with the foregoing description in order to define the scope of the invention.

## Claims

1. A forced drainage system for the intermediate deposit of an evaporative air conditioner, comprising:
a) a first unit (1) arranged to be situated on the roof of a cab, the interior of which is to be conditioned, comprising at least:
- a support base (3),
- a porous filter (4),
- an intermediate deposit (5),
- an air propeller (6),
- a cover (7);
and
b) a second unit (2) separated from the first unit (1) and arranged to be situated at a lower height than the latter, comprising at least:
- an outer water deposit (11), and
- a pump (12) propelling water towards the first unit (1);
the first unit (1) and the second unit (2) being connected by at least one delivery pipe (13) and by at least one gravity drainage drainpipe (14), as well as by one or more wires (15) allowing for the circulation of electric current for the actuation and functioning of the system;
**characterized by** a hollow T-shaped part (16) connecting the intermediate deposit (5) to the delivery pipe (13) and a return pipe (17), such that provided there is a water level in the intermediate deposit (5), the water flows towards the return pipe (17) when the system is mounted on the roof.

2. A forced drainage system for the intermediate deposit of an evaporative air conditioner according to claim 1, further comprising one or more air ducts (8) of the air propeller (6) in the first unit (1) propelling air to the cab.

3. A forced drainage system for the intermediate deposit of an evaporative air conditioner according to any of the previous claims, further comprising an electronic control box (9) for the evaporative air conditioner, joined to the first unit (1) and situated in the cab interior.

4. A forced drainage system for the intermediate deposit of an evaporative air conditioner according to claim 3, comprising a radio frequency remote control which allows starting up and controlling the electronic control box (9) for the evaporative air conditioner.

5. A forced drainage system for the intermediate deposit of an evaporative air conditioner according to any of claims 3 or 4, wherein the evaporative air conditioner conditions a cab with doors, such as a cab of a vehicle, protected by the door warning system, and wherein the door warning system is integrated with the electronic control box (9).

6. A forced drainage system for the intermediate deposit of an evaporative air conditioner according to any of the previous claims, wherein the first unit (1) is fixed to the cavity of a hatch of the cab by means of a cover plate (10) for said cavity.

7. A forced drainage system for the intermediate deposit of an evaporative air conditioner according to any of the previous claims, comprising a water level sensor (19) in the outer water deposit (11).

8. A forced drainage system for the intermediate deposit of an evaporative air conditioner according to any claims 1 to 6, comprising two water level sensors in the outer water deposit (11).

## Patentansprüche

1. Zwangsentleerungssystem für die Zwischenablagerungseinrichtung einer Verdunstungsklimaanlage, das folgende Merkmale aufweist:
a) eine erste Einheit (1), die auf dem Dach eines Fahrerhauses befindlich angeordnet ist, dessen Innenraum klimatisiert werden soll, wobei die Einheit zumindest folgende Merkmale aufweist:
- eine Trägerbasis (3),
- einen porösen Filter (4)
- eine Zwischenablagerungseinrichtung (5),
- ein Lüfterrad (6),
- eine Abdeckung (7);
und
b) eine zweite Einheit (2), die von der ersten Einheit (1) getrennt ist und auf einer niedrigeren Höhe als letztere befindlich angeordnet ist, wobei die zweite Einheit (2) zumindest folgende Merkmale aufweist:
- eine äußere Wasserablagerungseinrichtung (11), und
- eine Pumpe (12), die Wasser hin zu der ersten Einheit (1) treibt;
wobei die erste Einheit (1) und die zweite Einheit (2) durch zumindest ein Zuführrohr (13) und durch zumindest ein Schwerkraftentleerungs-Ablaufrohr (14) sowie durch ein oder mehrere Drähte (15) verbunden sind, wodurch die Zirkulation von elektrischem Strom für die Betätigung und das Funktionieren des Systems ermöglicht wird;
**gekennzeichnet durch** ein T-förmiges Hohlteil (16), das die Zwischenablagerungseinrichtung (5) mit dem Zuführrohr (13) und einem Rückführrohr (17) verbindet, so daß ein Wasserstand in der Zwischenablagerungseinrichtung (5) bereitgestellt ist, das Wasser hin zu dem Rückführrohr (17) strömt, wenn das System auf dem Dach befestigt ist.

2. Zwangsentleerungssystem für die Zwischenablagerungseinrichtung einer Verdunstungsklimaanlage nach Anspruch 1, das ferner ein oder mehrere Kanäle (8) von dem Lüfterrad (6) in der ersten Einheit (1) aufweist, das Luft in das Fahrerhaus treibt.

3. Zwangsentleerungssystem für die Zwischenablagerungseinrichtung einer Verdunstungsklimaanlage nach einem der vorhergehenden Ansprüche, das ferner einen elektronischen Steuerkasten (9) für die Verdunstungsklimaanlage aufweist, der mit der ersten Einheit (1) verbunden ist und sich im Innenraum des Fahrerhauses befindet.

4. Zwangsentleerungssystem für die Zwischenablagerungseinrichtung einer Verdunstungsklimaanlage nach Anspruch 3, das eine Radiofrequenz-Fernsteuerung aufweist, die ein Hochfahren und Steuern des elektronischen Steuerkastens (9) für die Verdunstungsklimaanlage ermöglicht.

5. Zwangsentleerungssystem für die Zwischenablagerungseinrichtung einer Verdunstungsklimaanlage nach einem der Ansprüche 3 bis 4, wobei die Verdunstungsklimaanlage ein Fahrerhaus mit Türen klimatisiert, wie z. B. das Fahrerhaus eines Fahrzeugs, das durch das Türwarnsystem geschützt ist, und wobei das Türwarnsystem in den elektronischen Steuerkasten (9) integriert ist.

6. Zwangsentleerungssystem für die Zwischenablagerungseinrichtung einer Verdunstungsklimaanlage nach einem der vorhergehenden Ansprüche, wobei die erste Einheit (1) an dem Hohlraum einer Bodenluke des Fahrerhauses mittels einer Abdeckplatte (10) für den Hohlraum befestigt ist.

7. Zwangsentleerungssystem für die Zwischenablagerungseinrichtung einer Verdunstungsklimaanlage nach einem der vorhergehenden Ansprüche, das einen Wasserstandssensor (19) in der äußeren Wasserablagerungseinrichtung (11) aufweist.

8. Zwangsentleerungssystem für die Zwischenablagerungseinrichtung einer Verdunstungsklimaanlage nach einem der Ansprüche 1 bis 6, das zwei Wasserstandssensoren in der äußeren Wasserablagerung (11) aufweist.

## Revendications

1. Un système d'écoulement forcé pour le réceptacle intermédiaire d'un climatiseur d'air à évaporation, comprenant :
a) un premier ensemble (1) configuré pour être disposé sur le toit d'un habitacle dont l'intérieur doit être climatisé, comprenant au moins :
- une base support (3),
- un filtre poreux (4),
- un réceptacle intermédiaire (5),
- un ventilateur d'air (6),
- un capot (7) ; et
b) un second bloc (2) séparé du premier bloc (1) et configuré pour être disposé à une hauteur moindre que ce dernier, comprenant au moins :
- un réceptacle d'eau extérieur (11), et
- une pompe (12) envoyant l'eau vers le premier bloc (1) ;
le premier bloc (1) et le second bloc (2) étant reliés par au moins un tuyau d'admission (12) et par au moins un tuyau d'évacuation par gravité (14), ainsi que par un ou plusieurs fils (15) permettant la circulation du courant électrique pour l'actionnement et le fonctionnement du système ;
**caractérisé par** une pièce creuse en forme de T (16) reliant le réceptacle intermédiaire (5) au tuyau d'admission (13) et à un tuyau de retour (17), de manière à disposer d'un niveau d'eau dans le réceptacle intermédiaire (5), l'eau s'écoulant vers le tuyau de retour (17) lorsque le système est monté sur le toit.

2. Un système d'écoulement forcé pour le réceptacle intermédiaire d'un climatiseur d'air à évaporation selon la revendication 1, comprenant en outre un ou plusieurs conduits d'air (8) du ventilateur d'air (6) dans le premier bloc (1) envoyant de l'air à l'habitacle.

3. Un système d'écoulement forcé pour le réceptacle intermédiaire d'un climatiseur d'air à évaporation selon l'une des revendications précédentes, comprenant en outre un coffret de commande électronique (9) pour le climatiseur d'air à évaporation, relié au premier bloc (1) et disposé à l'intérieur de l'habitacle.

4. Un système d'écoulement forcé pour le réceptacle intermédiaire d'un climatiseur d'air à évaporation selon la revendication 3, comprenant une télécommande radiofréquence qui permet de mettre en route et de commander le coffret de commande électronique (9) pour le climatiseur d'air à évaporation.

5. Un système d'écoulement forcé pour le réceptacle intermédiaire d'un climatiseur d'air à évaporation selon l'une des revendications 3 ou 4, dans lequel le climatiseur d'air à évaporation climatise un habitacle avec des portes, tel que l'habitacle d'un véhicule, protégé par le système d'alarme des portes, et dans lequel le système d'alarme des portes est intégré au coffret de commande électronique (9).

6. Un système d'écoulement forcé pour le réceptacle intermédiaire d'un climatiseur d'air à évaporation selon l'une des revendications précédentes, dans lequel le premier bloc (1) est fixé à la cavité d'un hayon de l'habitacle au moyen d'un plaque formant couvercle (10) pour cette cavité.

7. Un système d'écoulement forcé pour le réceptacle intermédiaire d'un climatiseur d'air à évaporation selon l'une des revendications précédentes, comprenant un capteur de niveau d'eau (19) dans le réceptacle d'eau extérieur (11).

8. Un système d'écoulement forcé pour le réceptacle intermédiaire d'un climatiseur d'air à évaporation selon l'une des revendications 1 à 6, comprenant deux capteurs de niveau d'eau dans le réceptacle d'eau extérieur (11).
